# EUROPEAN PATENT SPECIFICATION

(11) **EP 4 557 967 B1**
(45) Date of publication and mention of the grant of the patent: **08.07.2026**
(21) Application number: 23744140.7
(22) Date of filing: 14.07.2023
(51) Int. Cl.: A23J 3/14, A23J 3/22, A23J 3/26, A23L 13/40, A23P 30/20, A23P 30/40

(54) **A PROCESS FOR PREPARING A FORMED PLANT-BASED FOOD PRODUCT**
VERFAHREN ZUM HERSTELLEN EINES GEBILDETEN LEBENSMITTELPRODUKTS AUF PFLANZLICHER BASIS
PROCÉDÉ DE PRÉPARATION D'UN PRODUIT ALIMENTAIRE FORMÉ À BASE DE PLANTES

(30) Priority: 19.07.2022 EP 22185767
(43) Date of publication of application: 28.05.2025
(73) Proprietor: Société des Produits Nestlé S.A., 1800 Vevey (CH)
(72) Inventor: HALDEN, Jonas, 78337 Öhningen (DE); SKIBA, Tomasz, 69214 Eppelheim (DE); SODHI, Jasleen Kaur, 78224 Singen (DE)
(74) Representative: Dinger, Hansjörg
(86) International application number: PCT/EP2023/069713
(87) International publication number: WO 2024/017802

(56) References cited:
- WO-A1-2021/037574
- WO-A1-2022/112382
- CA-A1- 3 172 829
- PLATTNER ET AL: "Extrusion techniques for meat analogues", CEREAL FOODS WORLD, AMERICAN ASSOCIATION OF CEREAL CHEMISTS, AACC, ST. PAUL, MN., USA, vol. 65, no. 4, 1 July 2020 (2020-07-01), XP009527206, ISSN: 0009-0360, [retrieved on 20201022], DOI: 10.1094/CFW-65-4-0043

## Description

The invention generally relates to a process for preparing a formed plant-based food product. More specifically the invention relates to a process for preparing a formed plant-based food product having a 3D shape with a fibrous appearance and good juiciness and tenderness properties.

In recent years, it has become common for consumers to choose foods that are convenient and tasty. However, convenient or ready-to-eat foods tend to be nutritionally unbalanced as they are high in fat and short-chain carbohydrates e.g. refined sugars, and low in dietary fiber and protein. In particularly, it is appreciated that the high fat and low dietary fiber level of these convenient foods can contribute to obesity and various chronic diseases, such as coronary heart disease, stroke, diabetes, and certain types of cancer.

It is well known that by supplementing foods with increased levels of dietary fiber and protein, taste can be seriously compromised as off-flavours result in a chalky and bland taste. In addition to the challenges associated with improving taste, it is known that increasing a food's protein level typically results in the loss of the desirable product texture that consumers expect. This is especially critical for plant-based food product products.

WO2022112382 describes a process for preparing an extruded plant-based food product, wherein an aqueous solution is injected by a needle injector or vacuum-tumbler into the extrudate. The injection with an aqueous solution is done to increase the juiciness of the extrudate having a layered fiber structure.

Hence, there is an existing need in the art and industry to provide a better solution for formed plant-based food products having a fibrous appearance with good juiciness and tenderness properties.

The object of the present invention is to improve the state of the art or at least provide an alternative for a formed plant-based food product: i) a formed plant-based food product for humans; ii) a formed plant-based food product with a high protein content; iii) a formed plant-based food product with a protein content above 10wt%; iv) a formed plant-based food product having a fibrous appearance with good juiciness and tenderness properties; v) a formed plant-based food product having good taste properties; vi) a formed plant-based food product having a fibrous appearance with good juiciness, tenderness and good taste properties; vii) a formed plant-based food product having a fibrous appearance with a randomised fiber structure and with good juiciness and tenderness properties; viii) a formed plant-based food product having a fibrous appearance with a randomised fiber structure and with good juiciness, tenderness and good taste properties;

The object of the present invention is achieved by the subject matter of the independent claims. The dependent claims further develop the idea of the present invention.

Accordingly, the present invention provides in a first aspect a process for preparing a formed plant-based food product comprising between 10 to 75wt% weight percent of the total composition of a high moisture extrudate, between 10 to 75wt% weight percent of the total composition of a textured plant protein, 40 to 70wt% weight percent of the total composition of water, 1 to 10wt% weight percent of the total composition of a binder and 0.5 to 15wt% weight percent of the total composition of a flavor, the process comprising the steps of:
a1) feeding an extruder barrel with a composition comprising 40-70wt% water and 15-35wt% plant protein;
a2) extruding the composition from step a1) at a temperature between 80 to 200°C and under a pressure between 3 to 60bar;
a3) cooling the composition from step a2) through a cooling die
a4) cutting or grinding the cooled composition from step a3) to obtain the high moisture extrudate;
b) hydrating the textured plant protein with 40 to 70wt% water based on hydrated texturized plant protein to obtain a hydrated textured plant protein, wherein the textured plant protein is a low moisture extruded textured fibered plant protein having a moisture content before hydrating again of max 20wt% of the total texturized plant protein;
c) blending the composition from step a4) with the hydrated textured plant protein from step b) with the binder and the flavor to obtain a plant-based food composition;
d) forming the plant-based food composition from step c)
e) heating the formed plant-based food composition from step d)
f) optionally freezing the formed plant-based food composition from step e)

Also disclosed in a further aspect not part of the present invention is a process for preparing a formed 3D shaped chicken breast comprising between 10 to 75wt% weight percent of the total composition of a high moisture extrudate, between 10 to 75wt% weight percent of the total composition of a textured plant protein, 40 to 70wt% weight percent of the total composition of water, 1 to 10wt% weight percent of the total composition of a binder and 0.5 to 15wt% weight percent of the total composition of a flavor, the process comprising the steps of:
a1) feeding an extruder barrel with a composition comprising 40-70wt% water and 15-35wt% plant protein;
a2) extruding the composition from step a1) at a temperature between 80 to 200°C and under a pressure between 3 to 60bar;
a3) cooling the composition from step a2) through a cooling die
a4) cutting or grinding the cooled composition from step a3) to obtain the high moisture extrudate;
b) hydrating the textured plant protein with 40 to 70wt% water based on hydrated texturized plant protein to obtain a hydrated textured plant protein, wherein the textured plant protein is a low moisture extruded textured fibered plant protein having a moisture content before hydrating again of max 20wt% of the total texturized plant protein;
c) blending the composition from step a4) with the hydrated textured plant protein from step b) with the binder and the flavor to obtain a plant-based food composition;
d) forming the plant-based food composition from step c)
e) heating the formed plant-based food composition from step d)
f) optionally freezing the formed plant-based food composition from step e)

A further aspect not part of the invention relates to a process for preparing a formed plant-based food product comprising between 10 to 75wt% weight percent of the total composition of a high moisture extrudate, between 10 to 75wt% weight percent of the total composition of a textured plant protein, 40 to 70wt% weight percent of the total composition of water, 1 to 10wt% weight percent of the total composition of a binder and 0.5 to 15wt% weight percent of the total composition of a flavor, the process comprising the steps of:
a1) feeding an extruder barrel with a composition comprising 40-70wt% water and 15-40wt% plant protein;
a2) extruding the composition from step a) above the texturization temperature of the plant protein;
a3) aerating the composition from step b) with a gas;
a4) pushing the aerated composition from step c) after the last extruder barrel through a constriction;
a5) cooling the aerated composition from step d) through a cooling die;
a6) cutting or grinding the cooled composition from step a5) to obtain the high moisture extrudate;
b) hydrating the textured plant protein with 40 to 70 wt% water based on hydrated texturized plant protein to obtain a hydrated textured plant protein, wherein the textured plant protein is a low moisture extruded textured fibered plant protein having a moisture content before hydrating again of max 20wt% of the total texturized plant protein;
c) blending the composition from step a6) with the hydrated textured plant protein from step b) with the binder and the flavor to obtain a plant-based food composition;
d) forming the plant-based food composition from step c)
e) heating the formed plant-based food composition from step d)
f) optionally freezing the formed plant-based food composition from step e)
wherein the constriction reduces a cross-sectional area D_{constr} compared to a cross-sectional area before the constriction D_{before} between 30 to 95% and wherein a cross-sectional area after the constriction D_{after} is increased again.

It has been surprisingly found by the inventors that by using the above-mentioned process a formed plant-based food product having a fibrous appearance with good juiciness and tenderness properties can be obtained. The process of the present disclosure allows the continuous production of a formed plant-based food product that has the fibrous appearance of real meat with good juiciness and tenderness properties using extrusion and mix and form technology. It has now been found by the inventors that hydrate texturized plant protein and combine them with high moisture extrudate and a binder to form a plant-based food product surprisingly has a beneficial effect regarding the fibrousness, meaty texture, juiciness and tenderness properties of a formed plant-based food product. By applying the aeration and the constriction in the extrusion process a less dense high moisture extrudate is achieved, having a foamier texture. The aeration increases the porosity of the high moisture extrudate and deliver a lighter colour. To use mix and form technology next to high moisture extrusion technology has the advantage that 3D shaped plant-based food products can be obtained and not only flat shape products as with extrusion only. In addition, the obtained product of the invention is juicier, is slightly whiter in color and has a more randomly aligned fiber structure compared to a high moisture extrudate having a denser layered fiber structure.

All percentages expressed herein are by weight of the total weight of the extruded plant-based food product unless expressed otherwise.

The terms "food," "food product" and "food composition" mean a product or composition that is intended for ingestion by a human.

A "plant-based food product" is a composition in which meat (i.e. skeletal tissue and non-skeletal muscle from mammals, fish and fowl) and meat by-products (i.e. the non-rendered clean parts, other than meat, derived from slaughtered mammals, fowl or fish) are completely absent. In a preferred embodiment the formed plant-based food product does not comprise protein from an animal source.

The term "formed" means that the plant-based food product has been shaped, e.g. via molding, pressing or casting. In an embodiment the formed plant-based food product is selected from the group of a plant-based Schnitzel, a plant-based chicken breast, a plant-based turkey, a plant-based beef, a plant-based fish, preferably a plant-based chicken breast. In a preferred embodiment the formed plant-based food product is a formed 3D shape plant-based food product.

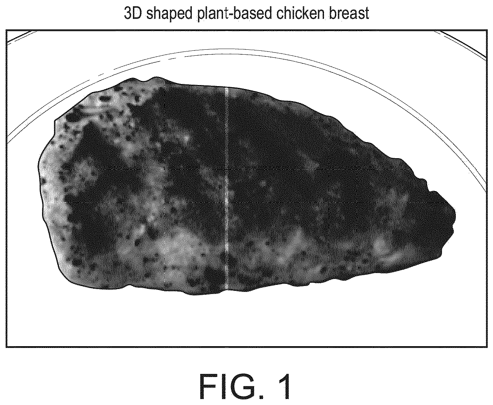

Figure 1 shows a 3D shaped plant-based chicken breast.

"Extrusion" is a process used to create objects of a fixed cross-sectional profile. A material is pushed or pulled through a die of the desired cross-section. The two main advantages of this process over other manufacturing processes are its ability to create very complex cross-sections, and to prepare products that are brittle, because the material only encounters compressive and shear stresses. High-moisture extrusion is known as wet extrusion. Extruders typically comprise an extruder barrel within which rotates a close-fitting screw. The screw is made up of screw elements, some of which are helical screw threads to move material through the extruder barrel. Material is introduced into the extruder barrel toward one end, moved along the extruder barrel by the action of the screw and is forced out of the extruder barrel through a nozzle or die at the other end. The rotating screw mixes and works the material in the barrel and compresses it to force it through the die or nozzle. The degree of mixing and work to which the material is subjected, the speed of movement of the material through the extruder barrel and thus the residence time in the extruder barrel and the pressure developed in the extruder barrel can be controlled by the pitch of the screw thread elements, the speed of rotation of the screw and the rate of introduction of material into the extruder barrel. The extruder barrel comprises multiple extruder barrel sections which are joined end to end. Multiple extruder barrel sections are required to carry out different processes involved in extrusion such as conveying, kneading, mixing, devolatilizing, metering and the like. Each extruder barrel section comprises a liner which is press fit into an extruder barrel casing, and heating and cooling elements are provided to regulate temperature of extruder barrel section within permissible range. The total length of an extrusion process can be defined by its modular extrusion barrel length. An extruder barrel is described by its unit of diameter.

The term "high moisture extrudate" refers to a defatted plant protein source, such as for example defatted soy flour or soy concentrate or soy protein isolate, which is processed e.g. by high moisture extrusion into chunks or flakes. In a preferred embodiment high moisture extrudate has a moisture content between 40 to 70wt%. In a preferred embodiment of the present invention the formed plant-based food product comprises between 10 to 75wt% (weight percent of the total composition) of high moisture extrudate, preferably between 10 to 70wt%, preferably between 10 to 65wt%, preferably between 10 to 60wt%, preferably between 10 to 55wt%, preferably between 10 to 50wt%, preferably between 15 to 70wt%, preferably between 15 to 65wt%, preferably between 15 to 60wt%, preferably between 15 to 55wt%, preferably between 15 to 50wt%, preferably between 20 to 75wt%, preferably between 20 to 70wt%, preferably between 20 to 65wt%, preferably between 20 to 60wt%, preferably between 20 to 55wt%, preferably between 20 to 50wt%, preferably between 25 to 70wt%, preferably between 25 to 65wt%, preferably between 25 to 60wt%, preferably between 25 to 55wt%, preferably between 25 to 50wt%, preferably between 30 to 75wt%, preferably between 30 to 70wt%, preferably between 30 to 65wt%, preferably between 30 to 60wt%, preferably between 30 to 55wt%, preferably between 30 to 50wt% (weight percent of the total composition).

The term "textured plant protein" is referred in the literature also as 'texturized plant' or 'texturized vegetable protein' (TVP). It typically refers to a defatted plant protein flour, such as for example defatted soy flour or soy concentrate, which is processed e.g. by low moisture extrusion into chunks or flakes. In an embodiment the textured plant protein has a length between 5 to 30 mm, preferably 10 to 20mm, and a thickness between 2 to 5 mm. In an embodiment the textured plant protein is a textured fibered plant protein. In a preferred embodiment texturized plant protein has a moisture content before hydrating again of max 20wt%, preferably max 15wt% (of the total texturized plant protein). In one preferred embodiment of the present invention the formed plant-based food product comprises between 10 to 75wt% (weight percent of the total composition) of textured plant protein, preferably between 10 to 70wt%, preferably between 10 to 65wt%, preferably between 10 to 60wt%, preferably between 10 to 55wt%, preferably between 10 to 50wt%, preferably between 15 to 70wt%, preferably between 15 to 65wt%, preferably between 15 to 60wt%, preferably between 15 to 55wt%, preferably between 15 to 50wt%, preferably between 20 to 75wt%, preferably between 20 to 70wt%, preferably between 20 to 65wt%, preferably between 20 to 60wt%, preferably between 20 to 55wt%, preferably between 20 to 50wt%, preferably between 25 to 70wt%, preferably between 25 to 65wt%, preferably between 25 to 60wt%, preferably between 25 to 55wt%, preferably between 25 to 50wt%, preferably between 30 to 75wt%, preferably between 30 to 70wt%, preferably between 30 to 65wt%, preferably between 30 to 60wt%, preferably between 30 to 55wt%, preferably between 30 to 50wt% (weight percent of the total composition). In an embodiment of the present invention, the textured plant protein of the formed plant-based food product is selected from soy-bean protein, pea protein, lentil protein, lupin bean protein, wheat gluten, or a combination thereof. Further appropriate protein sources may be proteins from beans such as green, red or black beans, chickpeas, fava beans, spirulina, or from chia, quinoa or hemp seeds. More preferably the textured plant protein of the formed plant-based food product is selected from wheat gluten.

The term "hydrated" means that the textured plant protein is combined with water, which is absorbed by the textured plant protein at a temperature of 22°C. For clarification: A 100% hydrated textured plant protein is a textured plant protein, which is fully saturated with water, i.e. which cannot absorb any further water or any further other aqueous liquid. The texturized plant protein is hydrated with 40-70 wt% water (based on hydrated texturized plant protein), preferably 50-66wt%.

The term "aerating" means that a gas is provided in an extruder by introducing the gas into an extruder. The gas can be provided into the extruder via a feed opening or by releasing the gas in the extruder due to a chemical reaction between a gas-forming compound and a gas releasing compound. In an embodiment a gas-forming compound are physiologically acceptable salts such as carbonates or hydrogen carbonates, for example, sodium carbonate (Na2CO3), potassium carbonate (K2CO3), or sodium hydrogen carbonate (NaHCO3), from which CO2 can be released. Another example is staghorn salt (a mixture of ammonium hydrogen carbonate (NH4HCO), ammonium carbonate ((NH4)2CO3) and ammonium carbamate (NH4CO2NH2)), from which the gases NH3, and CO2 can be released. The gas-releasing compound is usually a physiologically acceptable acid. The acid can be, for example, citric acid, a phosphoric acid compound such as disodium dihydrogen diphosphate or monocalcium orthophosphate, tartaric acid or one of its salts (such as potassium sodium tartrate (Rochelle salt), malic acid, fumaric acid, adipic acid or glucono delta-lactone. The acids can be used as free acids or in the form of their anhydrides or salts. In a preferred embodiment gas is provided into the extruder via a feed opening of the extruder, which is connected to a gas container (such as a pressure bottle) and allows a controlled introduction of gas into the extruder (for example, via a valve). In an embodiment the gas is selected from the group consisting of CO2, N2, N2O, SO2, water steam or a combination thereof, preferably CO2, N2, N2O, SO2 or a combination thereof, more preferably CO2, N2 or a combination thereof. In an embodiment the amount of gas introduced into the extruder is between 0.009 to 3wt% (total weight of composition), preferably 0.009 to 1wt%, preferably 0.01 to 1wt%, preferably 0.009 to 0.5wt%, preferably 0.009 to 0.2wt%, preferably 0.009 to 0.1wt%.

The term "constriction" reduces temporary the inside cross-sectional area called D_{constr}. This has an influence on the laminar flow of the extrudate. By passing the constriction a turbulent flow is generated, which influences a fiber alignment of the extrudate. The obtained product is less dense having a more meatlike fibrous structure compared to a standard extrusion process without a constriction. A less dense extrudate can be better injected with an aqueous solution. The constriction is made of metal or a heat stable plastic material and can have any geometry. In a preferred embodiment the constriction is a side constriction or centered constriction. The term "temporary" means that before and after the constriction the cross-sectional area is larger. The cross-sectional area before the constriction is called D_{before}. The cross-sectional area after the constriction is called D_{after}. In an embodiment the cross-sectional area D_{constr} < D_{before} and D_{constr} < D_{after}. In an embodiment the cross-sectional area D_{before} = D_{after}. In an embodiment the cross-sectional area D_{before} > D_{after} or D_{before} < D_{after}, preferably D_{before} > D_{after}. In an embodiment the constriction reduces the original cross-sectional area D_{before} compared to D_{constr} of between 30-95%, preferably between 30-90%, preferably between 30-85%, preferably between 30-80%, preferably between 30-75%, preferably between 30-70%, preferably between 30-60%, preferably between 40-95%, preferably between 40-90%, preferably between 40-85%, preferably between 40-80%, preferably between 40-75%, preferably between 40-70%, preferably between 40-65%, preferably between 40-60%, preferably between 50-95%, preferably between 50-90%, preferably between 50-85%, preferably between 50-80%, preferably between 50-75%, preferably between 50-70%, preferably between 55-95%, preferably between 55-90%, preferably between 55-85%, preferably between 55-80%, preferably between 55-75%.

In an embodiment the constriction is selected from a perforated aperture, a stud, a ripple, a slit, a breaker plate or a combination thereof. In an embodiment the constriction is located after the last extruder barrel, preferably between the last extruder barrel and a first half of the length of the cooling die, preferably between the last extruder barrel and a first third length of a cooling die, preferably between the last extruder barrel and a first quarter length of a cooling die, preferably between the last extruder barrel and the beginning of a cooling die. In an embodiment the constriction is located after the last extrusion barrel at a composition viscosity between 1000-4000Pas⁻¹, preferably at a composition viscosity between 1500-4000Pas⁻¹, preferably at a composition viscosity between 2000-4000Pas⁻¹, preferably at a composition viscosity between 1000-3500Pas⁻¹, preferably at a composition viscosity between 1000-3000Pas⁻¹, preferably at a composition viscosity between 1000-2500Pas⁻¹, preferably at a composition viscosity between 1500-3500Pas⁻¹, preferably at a composition viscosity between 1500-3000Pas⁻¹, preferably at a composition viscosity between 1500-2500Pas⁻¹,preferably at a composition viscosity between 2000-4000Pas⁻¹, preferably at a composition viscosity between 2000-3000Pas⁻¹. The composition has been thermally pretreated by using a pressure cell equipped oscillatory rheometer (MCR702, Anton Paar) at a defined temperature (T=120-160°C, t=90s) to afterwards measure the viscosity in the same equipment at a shear rate of 0.1 s-1 at 100°C.

A "cooling die" is cooling the extruded product to a desired temperature.

The term "plant protein" includes "plant protein isolates" or "plant protein concentrates" or combination thereof. The person skilled in the art knows how to calculate the amount of plant protein within a plant protein concentrate or plant protein isolate. The term "plant protein concentrate" as used herein is a plant material having a protein content between 50-90% (plant protein on a moisture-free basis), preferably between 65-75% (plant protein on a moisture-free basis). Plant protein concentrate also contains plant fiber, typically from about 3.5% up to about 20% by weight on a moisture-free basis. The term plant protein isolate, as used herein is a plant material having a protein content of at least about 90% plant protein on a moisture free basis, preferably between 90-96% (plant protein on a moisture-free basis).

Plant protein include plant protein concentrate or plant protein isolate from pea protein, corn protein (e.g., ground corn or corn gluten), wheat protein (e.g., ground wheat or wheat gluten such as vital wheat gluten), potato protein, legume protein such as soy protein (e.g., soybean meal, soy concentrate, or soy isolate), rice protein (e.g., ground rice or rice gluten), barley protein, algae protein, hemp protein, oat protein, canola protein, fava protein or combinations thereof. Preferably the plant protein is wheat gluten, pea protein, canola protein, hemp protein, fava protein, soy protein or a combination thereof, more preferably pea protein, soy protein, wheat gluten or a combination thereof. In a further embodiment, the extruded plant-based food product of the invention comprises plant protein within step a) in the amount of 15-40wt% (based on the composition), preferably 20-40wt%, preferably 25-40wt%, preferably 15-35wt%, preferably 15-30wt%, preferably 15-25wt%, preferably 20-35wt%, preferably 25-35wt%, preferably 20-30wt% (based on the composition). In a further embodiment, the extruded plant-based food product of the invention comprises soy protein, pea protein, wheat gluten or a combination thereof within step a1) in the amount of 15-40wt% (based on the composition), preferably 20-40wt%, preferably 25-40wt%, preferably 15-35wt%, preferably 15-30wt%, preferably 15-25wt%, preferably 20-35wt%, preferably 25-35wt%, preferably 20-30wt% (based on the composition). In a further embodiment, the extruded plant-based food product of the invention comprises a combination of soy or pea protein with wheat gluten within step a1) in the amount of 15-40wt% (based on the composition), preferably 20-40wt%, preferably 25-40wt%, preferably 15-35wt%, preferably 15-30wt%, preferably 15-25wt%, preferably 20-35wt%, preferably 25-35wt%, preferably 20-30wt% (based on the composition). In a further embodiment, the extruded plant-based food product of the invention comprises soy protein and wheat gluten within step a1) in the amount of 15-40wt% (based on the composition), preferably 20-40wt%, preferably 25-40wt%, preferably 15-35wt%, preferably 15-30wt%, preferably 15-25wt%, preferably 20-35wt%, preferably 25-35wt%, preferably 20-30wt% (based on the composition). In a further embodiment the plant protein is selected from a combination of at least two different plant proteins, wherein said plant-based proteins comprise wheat gluten and at least one other plant protein selected from pea protein, soy protein, faba bean protein, and canola protein and wherein wheat gluten comprises between 20 to 70% of total plant protein in the plant protein mixture, preferably between 40-60%. A combination of wheat gluten and at least one other plant protein has the advantage of a softer texture resulting in an even more tender product.

In a further embodiment, the extruded plant-based food product of the invention comprises water within step a1) in an amount of 40-70wt%, preferably 45-70wt%, preferably 45-65wt%, preferably 50-70wt%, preferably 50-65wt%, preferably 55-70wt%, preferably 55-65wt%.

In a further embodiment, the extruded plant-based food product of the invention comprises lipid in an amount of 1.5-10wt%, preferably 2-10wt%, preferably 2-8wt%, preferably 2-7wt%, preferably 3-8wt%, preferably 3-7wt%. Lipid can be added into the extrusion process and/or into a composition for marinating. In an embodiment of the invention the lipid is added into the extruder barrel at a location down-stream of the feeding location of step a1). The process of lipid-injection is described in WO2016150834. Lipid can be also added into the aqueous solution of the marination.

The term lipid includes any liquid oil, fat or combination thereof. In an embodiment the term lipid include soybean oil, corn oil, sunflower oil, high oleic sunflower oil, olive oil, canola oil, safflower oil, peanut oil, palm oil, cottonseed oil, coconut oil, almond oil, hazelnut oil, rape seed oil, fractionated palm fat, fully or partially hydrogenated or interesterified palm oil and combinations thereof. Preferably the lipid is sunflower oil or rape seed oil.

The term "flavor" in the context of this invention includes salt, flavouring agents, acids, taste enhancing ingredients, herbs, spices, vegetables or mixtures thereof, which are suitable for being used in a food product. Taste enhancing ingredients may be provided by monosodium glutamate (MSG) and/or yeast extract etc. Salt refers to any suitable alkali metal salt or mixture thereof. The salt used in the composition of this invention is typically, but not limited to, sodium chloride. For example, potassium chloride may be used or any low-sodium product having a taste impression of sodium chloride may be used, as long as the taste in the end formulation is acceptable. Acids may be provided by vinegar, lactic acid, citric acid or combination thereof. In a further embodiment, the extruded plant-based food product of the invention comprises flavor in the amount of 0.5-20wt% (based on the total composition), preferably 0.5-15wt%, preferably 0.5-10wt%, preferably 0.5-5wt%.

The term "filler" in the content of this invention includes carbohydrates. Carbohydrates may be provided by starches, flours, sugars, maltodextrins, glucose syrups or combination thereof, preferably starch. The term "starch" includes also flours. Starches and/or flours include those from rice, wheat, corn, barley, and sorghum, potato, cassava, sweet potato, arrowroot, yam, pea, chickpea, mung beans or lentil or any combination thereof. In a further embodiment, the extruded plant-based food product of the invention comprises fillers in the range 0.5-10wt%, preferably 0.5-8wt%, preferably 0.5-7wt%, preferably 1-10wt%, preferably 1-8wt%, preferably 1-7wt%, preferably 1-5wt%, preferably 2-7wt%, preferably 0.5-6wt%, preferably 0.5-5wt%, preferably 0.5-4wt%, preferably 0.5-3wt%.

In a further embodiment, the extruded plant-based food product of the invention comprises fibers in the range 0-15wt%, preferably 0-12wt%, preferably 0-10wt%, preferably 0-8wt%, preferably 0.1-15wt%, preferably 0.1-10wt%, preferably 0.1-8wt%, preferably 0.1-5wt%, preferably 1-15wt%, preferably 1-12wt%, preferably 1-10wt%, preferably 1-8wt%, preferably 5-15wt%. "Fibers" according to this invention in the extrusion process are dietary fibers, preferably a water insoluble vegetable dietary fiber. Dietary fiber consists of the remnants of edible plant cells, polysaccharides, lignin and associated substances resistant to (hydrolysis) digestion by the alimentary enzymes of humans. The dietary fibers are from vegetables, fruits, cereal or combinations thereof. Dietary fibers are selected from at least one of carrot, beetroot, pumpkin, citrus, wheat, oat, bamboo, tomato, bell pepper, leek, ginger, onion, kale, parsnip, celery, cucumber, courgette, broccoli, kohlrabi, asparagus, bean, fava bean, lentil, chickpea, peas, lupin, vetches or combinations thereof, preferably carrot, beetroot, pumpkin, citrus, wheat, oat, bamboo, tomato or combinations thereof.

In an embodiment of the invention, the extruded plant-based food product comprises one or more fortification compounds as vitamins, minerals and iron salts. The term vitamins include Vitamins A, B-complex (such as B-1, B-2, B-6 and B-12), C, D, E and K, niacin, and acid vitamins such as pantothenic acid, folic acid and biotin, preferably vitamin B-12. The term minerals include calcium, iron, zinc, magnesium, iodine, copper, phosphorus, manganese, potassium, chromium, molybdenum, selenium, nickel, tin, silicon or vanadium. The term iron salts include ferric sodium EDTA, reduced iron, ferrous lactate, ferric citrate, ferric pyrophosphate, ferrous sulphate monohydrate or ferric ammonium citrate brown, preferably ferric pyrophosphate. Specific amounts of fortification compounds will depend on a variety of factors such as the identity of the ingredient; the species of animal; the animal's age, body weight, general health, sex, and diet; the animal's consumption rate; the purpose for which the food product is administered to the animal; and the like. Therefore, the components and their amounts may vary widely. Fortification compounds can be added into the extrusion process and/or into a composition for marinating.

In an embodiment the extruded plant-based food product can also comprise one or more colorants. The term colorant include FD&C colors, such as blue no. 1, blue no. 2, green no. 3, red no. 3, red no. 40, yellow no. 5, yellow no. 6, and the like; natural colorants and/or coloring food stuff, such as caramel coloring, annatto, chlorophyllin, cochineal, betanin, turmeric, saffron, paprika, lycopene, elderberry juice, pandan, butterfly pea and the like; titanium dioxide; carbon carbonate; and any suitable food colorant known to the skilled artisan. In one other embodiment of the present invention, the colorant is selected from bell pepper, beetroot, carrot, black current, malted barley powder or combination thereof. In one embodiment of the present invention the plant-based food product comprises between 0.1-10wt% (weight percent of the total composition) of colorants, preferably between 0.1-5wt% (weight percent of the total composition). Colorants can be added into the extrusion process and/or into a composition for marinating. Due to the heat sensitivity of the many colorants, the colorants are preferably added into a composition for marinating.

In a further embodiment, the extruded plant-based food product has a protein content of at least 5wt%, preferably at least 10wt%, preferably at least 12wt%. In a further embodiment, the extruded plant-based food product has a protein content between 5-30wt% (based on the total composition), preferably 5-20wt%, preferably 10-30wt%, preferably 10-20wt (based on the total composition).

In a further embodiment water might be mixed to a dry plant protein before feeding the extruder barrels through a slurry inlet. In case the plant protein is mixed with water before feeding the extruder barrel, the non-meat dough can be transferred, for example by pumping, from the mixing device. In an embodiment, the non-meat dough is transferred directly from the mixing device to the extruder barrel without any other processing or addition or removal of ingredients.

In a further embodiment plant protein in the form of a dry powder is added to the extruder barrel and water is added separately to the extruder barrel. The mixing of the dry plant protein and water is done within the extruder barrel through the mechanical energy forced. Therefore, it is not necessary to form a dough of the plant protein and water before feeding the extruder barrel.

The extruder barrels are heated to a temperature of between 70-300°C, preferably 80-200°C, preferably 90-190°C. The pressure on the front plate (between last extruder barrel and cooling die) is between 10-40 bar, preferably 10-30 bar, preferably 10-20 bar. The screw speed is around 50-600rpm, preferably 50-500rpm, preferably 100-600rpm, preferably 200-600rpm, preferably between 200-500rpm, preferably between 200-400rpm.

During the cooling within the cooling die both the temperature and the pressure are gradually reduced as the heated non-meat dough travels through the cooling device. The dough has moisture and is under elevated temperature, so preferably moisture flashing is controlled to avoid rapid expansion of the food product. Product expansion that is too rapid can disrupt the structure of the texturized food product. However, depending on the desired image of the final food product, some flashing may be required to reduce the temperature of the centre of the food product and/or to expose some of the fibers in the food product. In a preferred embodiment of the invention flashing is avoided. In an embodiment, the extruded mixture undergoes a decrease in pressure at a predetermine rate in the cooling device and/or is subjected to a predetermined final pressure at the end of the cooling device. The extruded mixture has an exit temperature at the end of the cooling die between 40-110°C, preferably between 50-100°C, preferably between 50-98°C, preferably between 60-95°C, preferably between 60-90°C, preferably between 65-98°C, preferably between 65-95°C, preferably between 65-90°C, preferably between 70-90°C.

In an embodiment of the present invention, the binder of the formed meat analogue product comprises a cellulose, a fiber, a gelatinized starch, a gum, an un-textured protein isolate, or a combination thereof, preferably a cellulose and a fiber. In one more preferred embodiment of the present invention, the binder is methylcellulose and citrus fiber, preferably methylcellulose. In an embodiment of the present invention the formed meat analogue product comprises between 1 to 10wt% (weight percent of the total composition) of binder, preferably between 1 to 8wt%, preferably between 1 to 6wt%, preferably between 1.5 to 6wt% (weight percent of the total composition). In an embodiment of the present invention the formed meat analogue product comprises between 1 to 10wt% (weight percent of the total composition) of methylcellulose, preferably between 1 to 8wt%, preferably between 1 to 6wt%, preferably between 1.5 to 6wt% (weight percent of the total composition). More preferably, the binder used in the formed meat analogue product is added as an emulsion. An "emulsion" is made with the binder, water and oil. The emulsion is formed with 1 part of binder combined with 1-5 parts of oil and 7 to 20 parts of water, preferably the emulsion is formed with 1 part of binder combined with 2-3 parts of oil and 12-17 parts of water.

"Gelatinized starch" can be sourced directly as gelatinized starch or can be achieved by cooking native starch with water.

"Un-textured plant protein isolate" refers to a protein isolate, which did not undergo a texturing process such as for example through extrusion.

The term "cutting" means that the extruded plant-based food product can be sliced, cut, ground, shredded, grated or a combination thereof, preferably sliced or cut. Cutting can be done with static, rotating or vibrating knives having vertical, horizontal and/or diagonal knives, depending on the shape of the food product to be manufactured. After cutting the high moisture extrudate has a particle size between 1 to 10mm, preferably 1 to 8mm, preferably between 1.5 to 6mm, preferably between 2 to 5mm.

Heating the formed plant-based food composition means frying or baking or frying and baking the formed plant-based food composition. In a preferred embodiment the heating temperature is between 80 to 250°C for at least 15 sec to 20min, preferably between 100 to 200°C for at least 15 sec to 20min preferably the heating temperature is between 80 to 250°C for at least 15 sec to 20min to ensure a product temperature of at least 75°C for 10 sec.

Those skilled in the art will understand that they can freely combine all features of the present invention disclosed herein. In particular, features described for the composition of the present invention may be combined with the process for the preparation of the composition, and vice versa. Further, features described for different embodiments of the present invention may be combined. Further advantages and features of the present invention are apparent from the examples. It will be appreciated that the invention as claimed is not intended to be limited in any way by these examples.

### EXAMPLES

The examples are describing the preparation of a formed plant-based food product by the process of this invention.

### Example 1: High moisture extrudate

A dry mix of the plant protein of 23wt% soy protein concentrate and 19wt% of wheat gluten (based on total amount of high moisture extrudate) was added through a hopper into the extruder barrel and 58wt% water (based on total amount of high moisture extrudate) is separately injected into the extruder. The extruder barrels are heated within a curve between 80-180°C. The cooling die is cooling the extruded mixture to an exit temperature of 80°C. The extruded product is cut to obtain a high moisture extrudate. The particle size of the high moisture extrudate after cutting or grinding is 3-5 mm. The extrudate was made on a Bühler B93 twin screw extruder.

### Example 2: Hydrating texturized plant protein

1/3 texturized plant protein (wheat protein from supplier Lory^{®}Tex) has been hydrated with 2/3 of cold water for 20min.

### Example 3: Binder preparation

Add 12 wt% of oil, 5 wt% of methylcellulose, 3wt% of vinegar and 3wt% of citrus fiber into a bowl chopper and mix at low speed followed by medium speed. 77wt% of water is added and further mixed at high speed for 90 sec.

### Example 4: Formed plant-based food product

To 36wt% of the emulsion of example 3, 30wt% of the high moisture extrudate (see example 1), 30wt% of the hydrated texturized plant protein (see example 2) and 4wt% of flavor are added and blended with revers knives until a homogeneous mix is achieved (speed 200 for 5 min). The obtained mass is transferred to a forming machine, fill in cavity and form plant-based chicken breast under pressure. The plant-based Schnitzel has been deep fried for 45 sec at 150°C and afterwards baked at 140°C for 20min.

### Example 5: Alternative extrusion process

Following in principle the process of example 1 a high moisture extrudate has been obtained by adding in addition N2 to an extruder barrel with a gas supply unit having a flowmeter with a flow control (Bronkhorst) and by having after the last extruder barrel a constriction D_{constr} to reduce the cross-sectional area D_{before} to 60%. After the constriction the cross-sectional area is increase again to D_{after} before entering the cooling die.

This high moisture extrudate has been further processed as described in example 4 to obtain a formed plant-based food product.

The obtained formed plant-based food product has been rated by 8 internal experienced panelists very similar to example 4, as being a little more juicy, tender and having also a good texture with good tearing apart attributes and more as meat like and in addition having a foamier (fluffier) texture. In addition, the obtained high moisture extrudates have a lighter color.

### Comparison examples 6-7:

Following the process of example 4 a formed extruded product has been obtained by using only hydrated texturized plant protein or only high moisture extrudates without the combination of both with the following composition:

| | **Comp. example 6** | **Comp. example 7** |
|---|---|---|
| High moisture extrudate [wt%] | | 60 |
| Hydrated texturized plant protein [wt%] | 60 | |
| Binder emulsion [wt%] | 36 | 36 |
| Flavor [wt%] | 4 | 4 |

The obtained formed plant-based food products have been rated by 8 internal experienced panelists regarding the sensory attributes and compared with example 4 of the invention. Comparison example 6 using only hydrated texturized plant protein has been described as being too soft and not having a real meaty texture.

Comparison example 7 using only high moisture extrudates has been described as being missing fiberness and having only one dimension of fiber texture.

Example 4 has been received as best example as having the best meaty texture similar to a chicken breast and having the best tenderness.

### Comparison example 8:

Example 6 of WO2022112382 has been repeated and been rated by 8 internal experienced panelists regarding the sensory attributes and compared with example 4 and comparison example 7 of the invention. The fiber structure of comparison example 8 and comparison example 7 are very similar. Both samples have thicker, firm and very aligned fiber structure. 7 of the 8 panelists liked the meaty texture similar to a chicken breast more in example 4 as the fiber are oriented more randomly. Comparison example 8 has been perceived tender and juicier as comparison example 7 and example 4 has been perceived even more tender and juicier as comparison example 8. Therefore, the juiciness and tender properties of example 4 has the best rating. Example 4 has a slightly lighter white color as comparison examples 7 and 8 and therefore closer to a chicken breast. All panelists rated the 3D shape of example 4 as more visual appealing as the flat shape of comparison examples 7 and 8.

## Claims

1. A process for preparing a formed plant-based food product comprising between 10 to 75wt% weight percent of the total composition of a high moisture extrudate, between 10 to 75wt% weight percent of the total composition of a textured plant protein, 40 to 70wt% weight percent of the total composition of water, 1 to 10wt% weight percent of the total composition of a binder and 0.5 to 15wt% weight percent of the total composition of a flavor, the process comprising the steps of:
a1) feeding an extruder barrel with a composition comprising 40-70wt% water and 15-35wt% plant protein;
a2) extruding the composition from step a1) at a temperature between 80 to 200°C and under a pressure between 3 to 60bar;
a3) cooling the composition from step a2) through a cooling die
a4) cutting or grinding the cooled composition from step a3) to obtain the high moisture extrudate;
b) hydrating the textured plant proteinwith 40 to 70wt% water based on hydrated texturized plant protein to obtain a hydrated textured plant protein, wherein the textured plant protein is a low moisture extruded textured fibered plant protein having a moisture content before hydrating again of max 20wt% of the total texturized plant protein;
c) blending the composition from step a4) with the hydrated textured plant protein from step b) with the binder and the flavor to obtain a plant-based food composition;
d) forming the plant-based food composition from step c);
e) heating the formed plant-based food composition from step d);
f) optionally freezing the formed plant-based food composition from step e);

2. The process for preparing a formed plant-based food product according to claim 1, wherein the formed plant-based food product does not comprise protein from an animal source.

3. The process for preparing a formed plant-based food product according to any one of the claims 1 to 2, wherein the plant protein is selected from soy protein, pea protein, canola protein, hemp protein, oat protein, fava protein or wheat gluten, or a combination thereof.

4. The process for preparing a formed plant-based food product according to any one of the claims 1 to 3, wherein the plant protein is selected from a combination of at least two different plant proteins, wherein said plant proteins comprise wheat gluten and at least one other plant protein selected from pea protein, soy protein, faba bean protein, and canola protein and wherein wheat gluten comprises between 20 to 70% of total plant protein in the plant protein mixture.

5. The process for preparing a formed plant-based food product according to any one of the claims 1 to 4, wherein the process further comprises aerating the composition between step a2) and a3) with a gas in an amount between 0.009 to 3wt%.

6. The process for preparing a formed plant-based food product according to claim 5, wherein the gas is selected from CO2, N2, N2O, SO2, water steam or a combination thereof.

7. The process for preparing a formed plant-based food product according to one of the claims 1 to 6, wherein the composition from step a2) is pushed after the last extruder barrel through a constriction and wherein the constriction reduces the cross-sectional area D_{constr} compared to a cross-sectional area before the constriction D_{before} between 30 to 95% and wherein a cross-sectional area after the constriction D_{after} is increased again.

8. The process for preparing a formed plant-based food product according to any one of the claims 1 to 7, wherein the extruded mixture has an exit temperature at the end of the cooling die between 50-110°C.

9. The process for preparing a formed plant-based food product according to any one of the claims 1 to 8, wherein the textured plant protein is selected from soy bean protein, pea protein, lentil protein, lupin bean protein, wheat gluten, and a combination thereof.

10. The process for preparing a formed plant-based food product according to any one of the claims 1 to 9, wherein the binder is added in form of an emulsion.

11. The process for preparing a formed plant-based food product according to any one of the claims 1 to 10, wherein the binder comprises a cellulose, a fiber, a gelatinized starch, an un-textured protein isolate, or a combination thereof.

12. The process for preparing a formed plant-based food product according to any one of the claims 1 to 11, wherein heating the formed plant-based food composition from step d) is frying or baking or a combination thereof.

13. The process for preparing a formed plant-based food product according to any one of the claims 1 to 12, wherein the formed plant-based food product comprises between 20 to 50wt% (weight percent of the total composition) of high moisture extrudate, between 20 to 50wt% (weight percent of the total composition) of textured plant protein, 40 to 70wt% (weight percent of the total composition) of water, 1 to 10wt% (weight percent of the total composition) of binder and 0.5 to 15wt% (weight percent of the total composition) of flavor.

14. The process for preparing a formed plant-based food product according to any one of the claims 1 to 13, wherein the formed plant-based food product has a 3D shape.

15. The process for preparing a formed plant-based food product according to any one of the claims 1 to 14, wherein the formed plant-based food product is a 3D shaped plant-based chicken breast.

## Patentansprüche

1. Verfahren zum Herstellen eines ausgebildeten Nahrungsmittelprodukts auf Pflanzenbasis, umfassend zu zwischen 10 bis 75 Gew.-% Gewichtsprozent der Gesamtzusammensetzung ein feuchtigkeitsreiches Extrudat, zu zwischen 10 bis 75 Gew.-% Gewichtsprozent der Gesamtzusammensetzung ein texturiertes Pflanzenprotein, zu 40 bis 70 Gew.-% Gewichtsprozent der Gesamtzusammensetzung Wasser, zu 1 bis 10 Gew.-% Gewichtsprozent der Gesamtzusammensetzung ein Bindemittel und zu 0,5 bis 15 Gewichtsprozent der Gesamtzusammensetzung ein Aroma, das Verfahren umfassend die Schritte:
a1) Beschicken eines Extruderzylinders mit einer Zusammensetzung, umfassend zu 40-70 Gew.-% Wasser und zu 15-35 Gew.-% Pflanzenprotein;
a2) Extrudieren der Zusammensetzung aus Schritt a1) bei einer Temperatur zwischen 80 bis 200 °C und unter einem Druck zwischen 3 bis 60 bar;
a3) Kühlen der Zusammensetzung aus Schritt a2) durch eine Kühldüse;
a4) Schneiden oder Mahlen der gekühlten Zusammensetzung aus Schritt a3), um das feuchtigkeitsreiche Extrudat zu erhalten;
b) Hydratisieren des texturierten Pflanzenproteins mit 40 bis 70 Gew.-% Wasser, bezogen auf hydratisiertes texturiertes Pflanzenprotein, um ein hydratisiertes texturiertes Pflanzenprotein zu erhalten, wobei das texturierte Pflanzenprotein ein extrudiertes texturiertes faseriges Pflanzenprotein mit geringer Feuchtigkeit ist, das vor dem erneuten Hydratisieren einen Feuchtigkeitsgehalt von max. 20 Gew.-% des gesamten texturierten Pflanzenproteins aufweist;
c) Vermischen der Zusammensetzung aus Schritt a4) mit dem hydratisierten texturierten Pflanzenprotein aus Schritt b) mit dem Bindemittel und dem Aroma, um eine pflanzenbasierte Nahrungsmittelzusammensetzung zu erhalten;
d) Ausbilden der pflanzlichen Nahrungsmittelzusammensetzung aus Schritt c);
e) Erhitzen der ausgebildeten Nahrungsmittelzusammensetzung auf Pflanzenbasis aus Schritt d);
f) gegebenenfalls Einfrieren der ausgebildeten Nahrungsmittelzusammensetzung auf Pflanzenbasis aus Schritt e);

2. Verfahren zum Herstellen eines ausgebildeten Nahrungsmittelprodukts auf Pflanzenbasis nach Anspruch 1, wobei das ausgebildete Nahrungsmittelprodukt auf Pflanzenbasis kein Protein eines tierischen Ursprungs umfasst.

3. Verfahren zum Herstellen eines ausgebildeten Nahrungsmittelprodukts auf Pflanzenbasis nach einem der Ansprüche 1 bis 2, wobei das Pflanzenprotein aus Sojaprotein, Erbsenprotein, Rapsprotein, Hanfprotein, Haferprotein, Favaprotein oder Weizengluten oder einer Kombination davon ausgewählt ist.

4. Verfahren zum Herstellen eines ausgebildeten Nahrungsmittelprodukts auf Pflanzenbasis nach einem der Ansprüche 1 bis 3, wobei das Pflanzenprotein aus einer Kombination von mindestens zwei unterschiedlichen Pflanzenproteinen ausgewählt ist, wobei die Pflanzenproteine Weizengluten und mindestens ein anderes Pflanzenprotein umfassen, das aus Erbsenprotein, Sojaprotein, Ackerbohnenprotein und Rapsprotein ausgewählt ist, und wobei Weizengluten zwischen 20 und 70 % des gesamten Pflanzenproteins in der Pflanzenproteinmischung umfasst.

5. Verfahren zum Herstellen eines ausgebildeten Nahrungsmittelprodukts auf Pflanzenbasis nach einem der Ansprüche 1 bis 4, wobei das Verfahren ferner ein Belüften der Zusammensetzung zwischen Schritt a2) und a3) mit einem Gas in einer Menge zwischen 0,009 und 3 Gew.-% umfasst.

6. Verfahren zum Herstellen eines ausgebildeten Nahrungsmittelprodukts auf Pflanzenbasis nach Anspruch 5, wobei das Gas aus CO2, N2, N2O, SO2, Wasserdampf oder einer Kombination davon ausgewählt ist.

7. Verfahren zum Herstellen eines ausgebildeten Nahrungsmittelprodukts auf Pflanzenbasis nach einem der Ansprüche 1 bis 6, wobei die Zusammensetzung aus Schritt a2) nach dem letzten Extruderzylinder durch eine Verengung gedrückt wird und wobei die Verengung die Querschnittsfläche D_{Vereng} im Vergleich zu einer Querschnittsfläche vor der Verengung Dᵥₒᵣ zwischen 30 bis 95 % reduziert und wobei eine Querschnittsfläche nach der Verengung D_{nach} wieder vergrößert wird.

8. Verfahren zum Herstellen eines ausgebildeten Nahrungsmittelprodukts auf Pflanzenbasis nach einem der Ansprüche 1 bis 7, wobei die ausgebildete Mischung eine Austrittstemperatur an dem Ende der Kühldüse zwischen 50-110 °C aufweist.

9. Verfahren zum Herstellen eines ausgebildeten Nahrungsmittelprodukts auf Pflanzenbasis nach einem der Ansprüche 1 bis 8, wobei das texturierte Pflanzenprotein aus Sojabohnenprotein, Erbsenprotein, Linsenprotein, Lupinenbohnenprotein, Weizengluten und einer Kombination davon ausgewählt ist.

10. Verfahren zum Herstellen eines ausgebildeten Nahrungsmittelprodukts auf Pflanzenbasis nach einem der Ansprüche 1 bis 9, wobei das Bindemittel in Form einer Emulsion zugegeben wird.

11. Verfahren zum Herstellen eines Nahrungsmittelprodukts auf Pflanzenbasis nach einem der Ansprüche 1 bis 10, wobei das Bindemittel eine Cellulose, eine Faser, eine gelatinierte Stärke, ein nicht texturiertes Proteinisolat oder eine Kombination davon umfasst.

12. Verfahren zum Herstellen eines ausgebildeten Nahrungsmittelprodukts auf Pflanzenbasis nach einem der Ansprüche 1 bis 11, wobei ein Erhitzen der ausgebildeten Nahrungsmittelzusammensetzung auf Pflanzenbasis aus Schritt d) Braten oder Backen oder eine Kombination davon ist.

13. Verfahren zum Herstellen eines ausgebildeten Nahrungsmittelprodukts auf Pflanzenbasis nach einem der Ansprüche 1 bis 12, wobei das ausgebildete Nahrungsmittelprodukt auf Pflanzenbasis zu zwischen 20 bis 50 Gew.-% (Gewichtsprozent der Gesamtzusammensetzung) feuchtigkeitsreiches Extrudat, zu zwischen 20 bis 50 Gew.-% (Gewichtsprozent der Gesamtzusammensetzung) texturiertes Pflanzenprotein, zu 40 bis 70 Gew.-% (Gewichtsprozent der Gesamtzusammensetzung) Wasser, zu 1 bis 10 Gew.-% (Gewichtsprozent der Gesamtzusammensetzung) Bindemittel und zu 0,5 bis 15 Gew.-% (Gewichtsprozent der Gesamtzusammensetzung) Aroma umfasst.

14. Verfahren zum Herstellen eines ausgebildeten Nahrungsmittelprodukts auf Pflanzenbasis nach einem der Ansprüche 1 bis 13, wobei das ausgebildete Nahrungsmittelprodukt auf Pflanzenbasis eine 3D-Form aufweist.

15. Verfahren zum Herstellen eines ausgebildeten Nahrungsmittelprodukts auf Pflanzenbasis nach einem der Ansprüche 1 bis 14, wobei das Nahrungsmittelprodukt auf Pflanzenbasis eine 3D-geformte Hähnchenbrust auf Pflanzenbasis ist.

## Revendications

1. Procédé permettant de préparer un produit alimentaire formé d'origine végétale comprenant entre 10 et 75 % en poids pourcentage en poids de la composition totale d'un extrudat à haute humidité, entre 10 et 75 % en poids pourcentage en poids de la composition totale d'une protéine végétale texturée, 40 à 70 % en poids en pourcentage en poids de la composition totale d'eau, 1 à 10 % en poids en pourcentage en poids de la composition totale d'un liant et 0,5 à 15 % en poids en pourcentage en poids de la composition totale d'un arôme, le procédé comprenant les étapes consistant à :
a1) alimenter un cylindre d'extrusion avec une composition comprenant 40 à 70 % en poids d'eau et 15 à 35 % en poids de protéine végétale ;
a2) extruder la composition de l'étape a1) à une température comprise entre 80 et 200 °C et sous une pression comprise entre 3 et 60 bar ;
a3) refroidir la composition de l'étape a2) à travers une matrice de refroidissement ;
a4) couper ou broyer la composition refroidie de l'étape a3) pour obtenir l'extrudat à haute humidité ;
b) hydrater la protéine végétale texturée avec 40 à 70 % en poids d'eau à base de protéine végétale texturée hydratée pour obtenir une protéine végétale texturée hydratée, dans lequel la protéine végétale texturée est une protéine végétale fibrée, texturée, extrudée à faible humidité ayant une teneur en humidité avant hydratation supplémentaire de 20 % en poids maximum de la protéine végétale texturée totale ;
c) mélanger la composition de l'étape a4) avec la protéine végétale texturée hydratée de l'étape b) avec le liant et l'arôme pour obtenir une composition alimentaire d'origine végétale ;
d) former la composition alimentaire d'origine végétale de l'étape c) ;
e) chauffer la composition alimentaire formée d'origine végétale de l'étape d) ;
f) éventuellement congeler la composition alimentaire d'origine végétale formée de l'étape e).

2. Procédé permettant de préparer un produit alimentaire formé d'origine végétale selon la revendication 1, dans lequel le produit alimentaire formé d'origine végétale ne comprend pas de protéine provenant d'une source animale.

3. Procédé permettant de préparer un produit alimentaire formé d'origine végétale selon l'une quelconque des revendications 1 à 2, dans lequel la protéine végétale est choisie parmi de la protéine de soja, de la protéine de pois, de la protéine de canola, de la protéine de chanvre, de la protéine d'avoine, de la protéine de féverole ou du gluten de blé, ou une combinaison de ceux-ci.

4. Procédé permettant de préparer un produit alimentaire formé d'origine végétale selon l'une quelconque des revendications 1 à 3, dans lequel la protéine végétale est choisie parmi une combinaison d'au moins deux protéines végétales différentes, dans lequel lesdites protéines végétales comprennent du gluten de blé et au moins une autre protéine végétale choisie parmi de la protéine de pois, de la protéine de soja, de la protéine de féverole et de la protéine de canola et dans lequel le gluten de blé comprend entre 20 et 70 % de la protéine végétale totale dans le mélange de protéines végétales.

5. Procédé permettant de préparer un produit alimentaire formé d'origine végétale selon l'une quelconque des revendications 1 à 4, dans lequel le procédé comprend en outre l'aération de la composition entre l'étape a2) et a3) avec un gaz en une quantité comprise entre 0,009 et 3 % en poids.

6. Procédé permettant de préparer un produit alimentaire formé d'origine végétale selon la revendication 5, dans lequel le gaz est choisi parmi du CO2, du N2, du N2O, du SO2, de la vapeur d'eau ou une combinaison de ceux-ci.

7. Procédé permettant de préparer un produit alimentaire formé d'origine végétale selon l'une des revendications 1 à 6, dans lequel la composition de l'étape a2) est poussée après le dernier cylindre d'extrusion à travers un étranglement et dans lequel l'étranglement réduit la surface de section transversale D_{constr} par comparaison avec une surface de section transversale avant l'étranglement Dₐᵥₐₙₜ entre 30 et 95 % et dans lequel une surface de section transversale après l'étranglement D_{après} est augmentée de nouveau.

8. Procédé permettant de préparer un produit alimentaire formé d'origine végétale selon l'une quelconque des revendications 1 à 7, dans lequel le mélange extrudé a une température de sortie au niveau de l'extrémité de la matrice de refroidissement entre 50 et 110 °C.

9. Procédé permettant de préparer un produit alimentaire formé d'origine végétale selon l'une quelconque des revendications 1 à 8, dans lequel la protéine végétale texturée est choisie parmi de la protéine de fèves de soja, de la protéine de pois, de la protéine de lentilles, de la protéine de fèves de lupin, du gluten de blé, ou une combinaison de ceux-ci.

10. Procédé permettant de préparer un produit alimentaire formé d'origine végétale selon l'une quelconque des revendications 1 à 9, dans lequel le liant est ajouté sous forme d'une émulsion.

11. Procédé permettant de préparer un produit alimentaire formé d'origine végétale selon l'une quelconque des revendications 1 à 10, dans lequel le liant comprend une cellulose, une fibre, un amidon gélatinisé, un isolat de protéines non texturé, ou une combinaison de ceux-ci.

12. Procédé permettant de préparer un produit alimentaire formé d'origine végétale selon l'une quelconque des revendications 1 à 11, dans lequel le chauffage de la composition alimentaire formée d'origine végétale de l'étape d) est une friture ou une cuisson au four ou une combinaison de celles-ci.

13. Procédé permettant de préparer un produit alimentaire formé d'origine végétale selon l'une quelconque des revendications 1 à 12, dans lequel le produit alimentaire formé d'origine végétale comprend entre 20 et 50 % en poids (pourcentage en poids de la composition totale) d'extrudat à haute humidité, entre 20 et 50 % en poids (pourcentage en poids de la composition totale) de protéine végétale texturée, entre 40 et 70 % en poids (pourcentage en poids de la composition totale) d'eau, entre 1 et 10 % en poids (pourcentage en poids de la composition totale) de liant et entre 0,5 et 15 % en poids (pourcentage en poids de la composition totale) d'arôme.

14. Procédé permettant de préparer un produit alimentaire formé d'origine végétale selon l'une quelconque des revendications 1 à 13, dans lequel le produit alimentaire formé d'origine végétale a une forme 3D.

15. Procédé permettant de préparer un produit alimentaire formé d'origine végétale selon l'une quelconque des revendications 1 à 14, dans lequel le produit alimentaire formé d'origine végétale est un blanc de poulet d'origine végétale en forme 3D.
